# EUROPÄISCHE PATENTSCHRIFT

(11) **EP 2 917 089 B1**
(45) Veröffentlichungstag und Bekanntmachung des Hinweises auf die Patenterteilung: **06.06.2018**
(21) Anmeldenummer: 13776787.7
(22) Anmeldetag: 11.10.2013
(51) Int. Cl.: B62D 1/04

(54) **FAHRZEUG-LENKRAD AUS FASERVERSTÄRKTEM KUNSTSTOFF**
VEHICLE STEERING WHEEL MADE FROM FIBRE REINFORCED PLASTIC
VOLANT DE VÉHICULE EN MATIÈRE PLASTIQUE RENFORCÉE PAR DES FIBRES

(30) Priorität: 07.11.2012 DE 102012220288
(43) Veröffentlichungstag der Anmeldung: 16.09.2015
(73) Patentinhaber: Bayerische Motoren Werke Aktiengesellschaft, 80809 München (DE)
(72) Erfinder: SCHÖLZEL, Matthias, 81369 Muenchen (DE)
(86) Internationale Anmeldenummer: PCT/EP2013/071299
(87) Internationale Veröffentlichungsnummer: WO 2014/072155

(56) Entgegenhaltungen:
- EP-A2- 0 795 456
- WO-A1-86/05454
- US-A- 4 635 500

## Beschreibung

Die Erfindung betrifft ein Lenkrad eines Fahrzeugs nach dem Oberbegriff des Anspruchs 1. Zum Stand der Technik wird neben der WO 86/05454 A1 und der US 4,635,500 A auf die EP 0 795 456 A2 verwiesen.

Leichtbau ist eine immer weiter an Bedeutung gewinnende Anforderung beim Bau von Fahrzeugen, insbesondere Personenkraftwagen. Die Verwendung von faserverstärktem Kunststoff ("Faserverbundwerkstoff"), insbesondere kohlefaserverstärktem Kunststoff, kann hier große Fortschritte bringen. Bereits in der DE 34 25 959 C2, deren Erst-Veröffentlichung 26 Jahre zurück liegt, ist ein Kraftfahrzeug-Lenkrad beschrieben, dessen Kranz aus mit Fasern verstärktem synthetischem Kunststoff besteht und dabei entweder aus mit flüssigem Kunststoff beschichteten Endlos-Glasfasern gewickelt oder aus mit flüssigem Kunststoff beschichteten kurzen Fasern gepresst ist. Die erstgenannte Herstellverfahren ist für eine Großserien-Fertigung relativ aufwändig und es können beide genannten Varianten hinsichtlich ihres Gewichts weiter verbessert werden.

Ein günstiges Herstellverfahren für ein Fahrzeug-Lenkrad, dessen möglichst gewichtsreduzierter Kranz zumindest abschnittsweise aus faserverstärktem Kunststoff besteht, bzw. ein entsprechendes und auf günstige Weise darstellbares Lenkrad zeigt bspw. die eingangs letztgenannte Schrift, wonach der Faserverbundwerkstoff in Form eines Flechtschlauchs auf eine Kernstruktur des Kranzes aufgezogen wird, so dass ein Flechtschlauch als Fasermaterial zum Einsatz kommt, bei welchem die Fasern und vorzugsweise Kohlenstofffasern zu einem Schlauch vorgeformt sind, der zusammen mit geeignetem Kunststoffmaterial schließlich den Lenkrad-Kranz bildet. Aus entsprechend langen Fasern, insbesondere sog. Endlosfasern, kann bei Gewährleistung einer hohen Oberflächengüte eines daraus zu formenden faserverstärkten Kunststoff-Bauteils ein Schlauch einfach hergestellt werden. Die Ausformung des Kranzes oder gegebenenfalls des gesamten Lenkrads unter Aushärtung des Kunststoffmaterials erfolgt in üblicher Weise in einem Formwerkzeug, wobei sicherzustellen ist, dass der zunächst noch völlig weiche Faser-Schlauch vollflächig an der Werkzeug-Oberfläche, d.h. an der Wand des Formhohlraums des Formwerkzeugs anliegt. Hierfür ist eine sog. Kernstruktur für den Lenkrad-Kranz vorgesehen, auf welche der Flechtschlauch aufgebracht bzw. aufgezogen wird. Selbstverständlich kann die Kernstruktur hierfür - abweichend von der Form eines üblichen Lenkrad-Kranzes - keinen geschlossenen Ring bilden, da mit letzterem ein Aufbringen oder Aufziehen eines Schlauchs nicht möglich wäre. Vielmehr müssen zumindest zwei Kranz-Segmente vorgesehen sein, welche geeignet zusammengesetzt zumindest annähernd die Kernstruktur des Lenkrad-Kranzes bilden, wobei zwischen diesen Segmenten irgendwelche Verbindungselemente oder Zwischenelemente vorgesehen sein können, vgl. bspw. die eingangs genannte WO 86/05454.

Für ein Lenkrad nach dem Oberbegriff des Anspruchs 1 soll hiermit aufgezeigt werden, wie in günstiger Weise die Verbindung zwischen dem durch einen Flechtschlauch auf einer Kernstruktur gebildeten Lenkrad-Kranz und einem wie üblichen vorgesehenen zentralen Lenkradtopf dargestellt werden kann.
Die Lösung dieser Aufgabe ergibt sich mit den kennzeichnenden Merkmalen des Anspruchs 1.

Ein erfindungsgemäßes Lenkrad weist demnach einen Kranz auf, der durch einen Flechtschlauch aus Faserverbundwerkstoff gebildet ist, der zumindest abschnittsweise eine Kernstruktur umhüllt, wobei ein Flechtschlauch aus Faserverbundwerkstoff wie oben erläutert ein aus Fasern, insbesondere Endlosfasern, die vorzugsweise aus Kohlenstoff bestehen, geflochtener Schlauch ist, der mit Kunststoffmaterial getränkt und geeignet, d.h. insbesondere in einem Formwerkzeug ausgehärtet ist. Die genannte Kernstruktur kann dabei ein relativ leichter Kunststoff-Hartschaumkern sein, durch den nicht nur die Form, sondern auch die Masse und somit das Rotations-Trägheitsmoment des Lenkrad-Kranzes einfach festgelegt werden können.

Es sorgt der Kunststoff-Flechtschlauch für eine angenehme Haptik und darüber hinaus auch für eine ansprechende Optik. Insbesondere über die Dicke dieses Flechtschlauchs kann ein gewünschtes Griffempfinden für den Fahrer des Fahrzeugs eingestellt werden, während das Massenträgheitsmoment des Lenkrads, welches das Fahrempfinden des Fahrers wesentlich beeinflusst, auch über die Dichte einer innerhalb des Kunststoff-Flechtschlauchs verbleibenden Kernstruktur auf eine gewünschte Größe eingestellt werden kann.
Es ist die Verbindung zwischen einem Lenkrad-Topf und dem Lenkrad-Kranz über zumindest eine Speichen-Struktur durch Umschlingen dieser Lenkrad-Bestandteile mit bandförmigem Faserverbundwerkstoff dargestellt. Als Lenkrad-Topf wird üblicherweise das Mittelteil eines Fahrzeug-Lenkrads bezeichnet, von dem üblicherweise die Lenkspindel (oder "Lenksäule") zu einem Lenkgetriebe führt und in dem auch der Airbag untergebracht ist. Der Lenkrad-Kranz ist mit dem Lenkrad-Topf über zumindest eine Speiche, vorliegend allgemein als Speichen-Struktur bezeichnet, verbunden, welche heute üblicherweise Bestandteil des Lenkradtopfes ist bzw. einstückig mit diesem verbunden ist.

Nach vorliegendem Vorschlag ist zumindest eine vorgeformte und zwischen dem Lenkradtopf und dem Lenkrad-Kranz quasi eingespannte Speichen-Struktur, die durchaus unabhängig vom Lenkradtopf dargestellt, alternativ aber auch ein Bestandteil desselben sein kann, an ihrem dem Lenkrad-Topf abgewandten freien Ende solchermaßen geformt, dass eine formschlüssige Verbindung mit dem Lenkrad-Kranz bzw. formschlüssige Abstützung am Lenkrad-Kranz möglich ist. Diese formschlüssige Verbindung oder Abstützung ist dann durch Bandmaterial aus Faserverbundwerkstoff gesichert. Der Begriff des "Bandmaterials" ist dabei allgemein und somit weitläufig zu verstehen, nämlich als geeignete Lagen von Faserverbundmaterial, welches den Lenkradtopf und die Speichenstruktur und den Lenkrad-Kranz umschlingt.

Es kann auch der Lenkrad-Topf und/oder eine Lenkradtopf-Abdeckung, unterhalb derer sich üblicherweise ein in den Lenkradtopf eingesetzter Airbag befindet, zumindest anteilig, vorzugsweise über einen weiten Bereich, aus Faserverbundwerkstoff bestehen, wobei dieser/diese aus Faserverbundlagen aufgebaut oder als Spritzgussteil vorzugsweise mit designprägendem Faserverbundmaterial an der Oberfläche (bspw. mit unidirektionalem Faserverlauf) hergestellt sein kann/können. Dabei sei ausdrücklich darauf hingewiesen, dass der Lenkradtopf bzw. dessen Bestandteile wie die genannte Abdeckung, aber auch die genannte Speichenstruktur aus einem Material-Mix bestehen können, d.h. bereichsweise beispielsweise aus Faserverbundwerkstoff und in einem anderen Abschnitt oder Bereich beispielsweise aus einem Metallwerkstoff bestehen können, was neben mechanischen Eigenschaften auch das optische Erscheinungsbild eines erfindungsgemäßen Lenkrads in erwünschter Weise beeinflussen kann. Diese Elemente eines erfindungsgemäßen Lenkrads können somit in einem Materialverbund ausgeführt sein, wobei Bestandteile oder Element-Teile, die in Faserverbundwerkstoff ausgeführt sind, mit Bestandteilen oder Element-Teilen, die beispielsweise in einer geeigneten Aluminiumlegierung oder einer Titanlegierung ausgeführt sind, auf geeignete Weise zusammengefügt sein können.

Ein Lenkrad aus Faserverbundwerkstoff besitzt bei heutigen Lenkrädern ähnlichem Aufbau eine wesentlich höhere Steifigkeit als die heutigen Lenkräder mit Magnesiumskelett. Um hierdurch den Fahrer bei einem Fahrzeug-Crash nicht verstärkt zu gefährden, kann im Lenkrad-Kranz und/oder im Übergang zwischen einer Speichen-Struktur und dem Lenkrad-Kranz zumindest ein sog. Crash-Element vorgesehen sein, welches sich im Falle eines Aufpralls des Fahrers auf dem Lenkrad geeignet plastisch verformt. Beispielsweise können solche Crash-Elemente nach Art von Muffen oder T-Stücken aus metallischem Werkstoff im Übergangsbereich von den Speichen zum aus mehreren Segmenten, die sich von einer Speichen-Struktur zur nächsten erstrecken, zusammengesetzten Lenkrad-Kranz vorgesehen sein. Diese Crash-Element sind daraufhin ausgelegt, sich im Falle eines Aufpralls des Fahrers auf dem Lenkrad gezielt zu Verbiegen, so dass sich das Lenkrad gesamthaft in einer gewünschten Weise verformt und dabei einen Teil der Aufprallenergie aufnimmt. Als Folge des Verbiegens eines Crash-Elementes zwischen zwei benachbarten Kranz-Segmenten können diese somit nach einem Aufprall bei Betrachtung in FahrzeugQuerrichtung einen Winkel zwischen sich einschließen. Im übrigen können die Verstärkungsfasern im Faserverbundmaterial grundsätzlich aus beliebigen geeigneten Werkstoffen bestehen. Sind diese Fasern in Kohlenstoff ausgeführt, so können diese Fasern vorteilhafterweise die Funktion der Heizdrähte einer Lenkradheizung mit übernehmen.

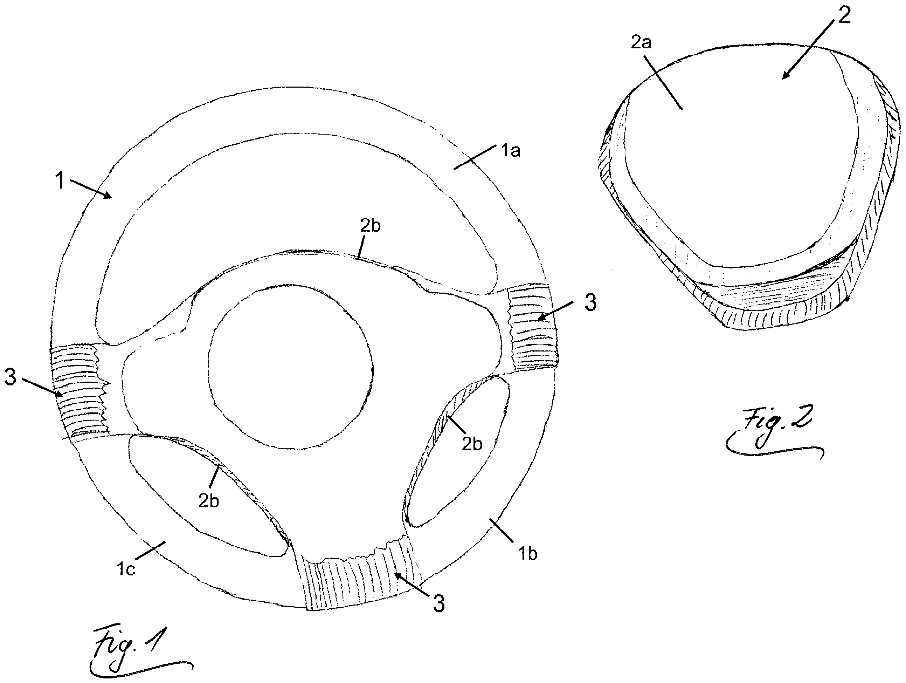

Die beigefügten Prinzip-Darstellungen zeigen ein mögliches Ausführungsbeispiel der vorliegenden Erfindung, wobei **Fig.1** eine Aufsicht auf ein erfindungsgemäßes bzw. erfindungsgemäß hergestelltes Lenkrad zeigt, dessen Lenkradtopf ohne Abdeckung in **Fig.2** dargestellt ist. Dabei ist der Lenkrad-Kranz mit der Bezugsziffer 1 gekennzeichnet ist, während der Lenkrad-Topf die Bezugsziffer 2 bzw. 2a trägt. Neben diesen beiden Bestandteilen des Lenkrads sind vorliegend drei Speichen-Strukturen 2b vorgesehen, die den Lenkrad-Kranz 1 mit dem Lenkradtopf 2a verbinden.

Der Lenkrad-Kranz 1 besteht vorliegend aus drei einzelnen sich quasi zwischen den jeweiligen Speichen-Strukturen 2b erstreckenden Kranz-Segmenten 1a, 1b, 1c, von denen jedes mit dem jeweils benachbarten Kranz-Segment über ein hier nicht sichtbares Verbindungselement, welches nach Art eines T-Stücks ausgebildet ist, vorzugsweise formschlüssig verbunden ist. Zusätzlich kann dieses T-Stück eine formschlüssige Verbindung zwischen der jeweiligen bspw. vorgeformten Speichen-Struktur 2b und dem Lenkrad-Kranz 1 herstellen, wobei in jedes T-Stück die beiden einander benachbarten Kranz-Segmente 1a, 1b, 1c und die jeweilige vorliegend vorgefertigte Speichen-Struktur 2b quasi eingesteckt sind. Gesichert wird diese Verbindung zwischen den Kranz-Segmenten 1a, 1b, 1c und den Speichenstrukturen 2b, die weiterhin am Lenkradtopf 2 bzw. 2a anliegen, durch mehrere Lagen 3 von bandförmigem Faserverbundwerkstoff, die geeignet vom Lenkrad-Topf 2 bzw. 2a ausgehend bzw. diesen umschlingend im Bereich der Speichen-Strukturen 2b und insbesondere in deren Übergangsbereich zum Lenkrad-Kranz 1 auch um den Lenkrad-Kranz 1 (und um das genannte Verbindungselement oder T-Stück) geschlungen sind. Die genannten und in der Figur nicht sichtbaren vorliegend drei Verbindungselemente nach Art eines T-Stücks sind also von den genannten Lagen 3 von bandförmigem Faserverbundwerkstoff überdeckt und fungieren weiterhin als Crash-Elemente gemäß vorangegangener Beschreibung. Selbstverständlich ist auch ein der zuvor erwähnter ggf. vorhandener Kunststoff-Hartschaumkern des Lenkrad-Kranzes 1 nicht sichtbar, da auf diesen ein Flechtschlauch aus Kohlefaser-Verbundmaterial ("CFK") aufgezogen ist, welcher die Oberfläche des Kranzes 1 des erfindungsgemäßen Lenkrads bildet. Im übrigen können alternativ zur Verwendung von vorgeformten Speichenstrukturen 2b diese Speichenstrukturen 2b vollständig durch die genannten mehreren Lagen von bandförmigen Faserverbundwerkstoff 3, die geeignet zwischen dem Lenkradtopf 2 und dem Kranz 1 unter Überdeckung der dessen Segmente 1a, 1b bzw. 1b, 1c bzw. 1c, 1a miteinander verbindenden Crash-Elemente gewickelt sind, gebildet sein.

## Patentansprüche

1. Lenkrad eines Fahrzeugs, dessen Kranz (1) durch einen Flechtschlauch aus einem Faserverbundwerkstoff gebildet ist, der zumindest abschnittsweise eine Kernstruktur umhüllt, und das weiterhin einen Lenkrad-Topf (2) und eine den Lenkrad-Kranz (1) mit dem Lenkrad-Topf (2, 2a) verbindende Speichenstruktur (2, 2b) aufweist, die Verbindung zwischen dem Lenkrad-Topf (2, 2a) und dem Lenkrad-Kranz (1) und der Speichenstruktur (2, 2b) zumindest auch durch Umschlingen dieser Lenkrad-Bestandteile mit bandförmigem Faserverbundwerkstoff (3) dargestellt ist,
**dadurch gekennzeichnet, dass** die Speichenstruktur (2, 2b) vorgeformt und mit ihrem dem Lenkrad-Topf (2, 2a) abgewandten freien Ende solchermaßen geformt ist, dass eine formschlüssige Verbindung mit Lenkrad-Kranz (1) oder eine formschlüssige Abstützung am Lenkrad-Kranz (1) vorliegt, die durch umschlingende Lagen (3) von bandförmigem Faserverbundwerkstoff (3) gesichert ist..

2. Lenkrad nach Anspruch 1, wobei die Kernstruktur des Lenkrad-Kranzes durch einen Kunststoff-Hartschaumkern gebildet ist.

3. Lenkrad nach Anspruch 1 oder 2, wobei auch der Lenkrad-Topf (2, 2a) und/oder eine Lenkradtopf-Abdeckung zumindest anteilig aus Faserverbundwerkstoff besteht und/oder in einem Materialverbund ausgebildet ist.

4. Lenkrad nach einem der vorangegangenen Ansprüche, wobei im Lenkrad-Kranz (1) im Übergang zwischen einer Speichen-Struktur (2b) und dem Lenkrad-Kranz (1, 1a, 1b, 1c) ein Crash-Element vorgesehen ist, welches sich im Falle des Aufpralls des Fahrers auf dem Lenkrad geeignet plastisch verformt.

5. Lenkrad nach einem der vorangegangenen Ansprüche, wobei die Fasern des Faserverbundwerkstoffs in Kohlenstoff ausgeführt sind und die Funktion der Heizdrähte einer Lenkradheizung mit übernehmen

## Claims

1. A steering wheel of a vehicle, the rim (1) of which is formed by a braided tube made of a fibre composite material which encases a core structure at least in part, and which also comprises a steering wheel hub (2) and a spoke structure (2, 2b), which connects the steering wheel rim (1) to the steering wheel hub (2, 2a), the connection being established between the steering wheel hub (2, 2a) and the steering wheel rim (1) and the spoke structure (2, 2b) at least also by wrapping a strip-like fibre composite material (3) around these steering wheel components,
**characterised in that** the spoke structure (2, 2b) is pre-shaped and is shaped with its free end remote from the steering wheel hub (2, 2a) in such a way that an interlocking connection to the steering wheel rim (1) or interlocking support on the steering wheel rim (1) is provided and is secured by layers (3) of strip-like fibre composite material (3) wrapped around the steering wheel rim.

2. A steering wheel according to claim 1, wherein the core structure of the steering wheel rim is formed by a plastics material-hard foam core.

3. A steering wheel according to claim 1 or 2, wherein the steering wheel hub (2, 2a) and/or a steering wheel hub cover also comprise/comprises at least in part fibre composite material and/or are/is formed in a material composite.

4. A steering wheel according to any one of the preceding claims, wherein a crash element is provided in the steering wheel rim (1) in the transition between a spoke structure (2b) and the steering wheel rim (1, 1a, 1b, 1c) and plastically deforms suitably in the event that the driver impacts on the steering wheel.

5. A steering wheel according to any one of the preceding claims, wherein the fibres of the fibre composite material are made of carbon and take on the function of the heating wires of a steering wheel heater.

## Revendications

1. Volant de véhicule dont la couronne (1) est formée par un tuyau tressé en un matériau composite renforcé par des fibres qui entoure au moins par segments une structure de noyau, et qui comporte en outre un moyeu (2) et une structure de branches (2, 2b) reliant la couronne (1) et le moyeu (2, 2a) du volant, la liaison entre le moyeu (2, 2a) et la couronne (1) du volant et la structure de branches (2, 2b) étant réalisée au moins également en enroulant ces éléments du volant avec un matériau composite renforcé par des fibres (3) en forme de bande,
**caractérisé en ce que**
la structure de branches (2, 2b) est préformée et est mise en forme par son extrémité libre située à l'opposé du moyeu du volant (2, 2a) de façon à obtenir une liaison par la forme avec la couronne (1) du volant ou un appui par la forme sur la couronne (1) du volant qui est assuré par des couches enveloppantes (3) de matériau synthétique renforcé par des fibres (3) en forme de bande.

2. Volant conforme à la revendication 1,
dans lequel la structure du noyau de la couronne du volant est formée par un noyau en une mousse de matériau synthétique dure.

3. Volant conforme à la revendication 1 ou 2, dans lequel le moyeu du volant (2, 2a) et/ou un revêtement de celui-ci est(sont) constitué(s) au moins en partie d'un matériau composite renforcé par des fibres et/ou est(sont) réalisé(s) en un matériau composite.

4. Volant conforme à l'une des revendications précédentes,
dans lequel il est prévu, dans la couronne du volant (1), au niveau de la transition entre la structure de branches (2b) et cette couronne du volant (1, 1a, 1b, 1c) un élément anticollision qui, en cas d'impact du conducteur sur le volant se déforme plastiquement de manière adaptée.

5. Volant conforme à l'une des revendications précédentes,
dans lequel les fibres du matériau synthétique renforcé par des fibres sont réalisées en carbone et remplissent conjointement la fonction de fils de chauffage d'un chauffage du volant.
